# EUROPEAN PATENT SPECIFICATION

(11) **EP 3 260 348 B1**
(45) Date of publication and mention of the grant of the patent: **21.08.2019**
(21) Application number: 15882603.2
(22) Date of filing: 19.02.2015
(51) Int. Cl.: B61D 15/00, B61C 17/00, B62B 3/00

(54) **DEVICE AND METHOD FOR MOUNTING EQUIPMENT UNDER FLOOR OF RAIL VEHICLE**
VORRICHTUNG UND VERFAHREN ZUR MONTAGE EINER VORRICHTUNG UNTER DEM BODEN EINES SCHIENENFAHRZEUGS
DISPOSITIF ET PROCÉDÉ POUR MONTER UN ÉQUIPEMENT SOUS LE PLANCHER D'UN VÉHICULE FERROVIAIRE

(43) Date of publication of application: 27.12.2017
(73) Proprietor: Hitachi, Ltd., Tokyo 100-8280 (JP)
(72) Inventor: TATEMICHI, Shinichi, Tokyo 100-8280 (JP); HARADA, Shinji, Tokyo 100-8280 (JP); KAI, Takayuki, Tokyo 100-8280 (JP); OOGI, Hiroki, Tokyo 100-8280 (JP); YOSHIDA, Kouji, Tokyo 100-8280 (JP); SASAO, Koji, Tokyo 100-8280 (JP); SHINMURA, Kouichi, Tokyo 100-8280 (JP); SAKAMOTO, Takayuki, Tokyo 100-8280 (JP); OHI, Mitsuru, Tokyo 100-8280 (JP); TUTUI, Kazuhiro, Tokyo 100-8280 (JP); HARADA, Akiyuki, Kudamatsu-shi Yamaguchi 744-0073 (JP)
(74) Representative: Mewburn Ellis LLP
(86) International application number: PCT/JP2015/054568
(87) International publication number: WO 2016/132500

(56) References cited:
- JP-A- H0 880 848
- JP-A- H06 277 735
- JP-A- H08 133 080
- JP-U- S5 396 552
- JP-U- S5 737 667

## Description

### Technical Field

The present invention relates to an apparatus for mounting equipment such as electric equipment, or an air brake apparatus under a floor of a railway vehicle, and a mounting method thereof.

### Background Art

Equipment such as an auxiliary power supply, an emergency power supply (battery), a brake control device, an air tank is fixed under a floor of a railroad vehicle represented by a railway vehicle.

Conventionally, after being mounted on a carrier truck provided with wheels or the like that can freely move on a plane at a manufacturing site for a railroad vehicle, these pieces of equipment have been carried under the floor of the railroad vehicle for each piece of equipment, lifted to a predetermined height by a lifting device provided to the carrier truck while longitudinal and lateral positions are finely adjusted, and then fixed at a predetermined place under the floor of the railroad vehicle.

In performing such a mounting operation, each piece of equipment is individually mounted to a mounting position under the floor of the railroad vehicle. Therefore, when the positioning accuracy of the carrier truck and the lifting device is not achieved, it takes a lot of time to position each piece of the equipment at a corresponding position under the floor, causing a problem of poor workability.

To solve these problems, for example, PTL 1 discloses an apparatus for improving efficiency of mounting work of underfloor equipment.

In the apparatus described in PTL 1, a plurality of pieces of equipment are previously mounted on a common mounting frame, and the mounting frame is positioned and mounted under the floor (underframe) of the railroad vehicle to shorten an assembling time.

### Citation List

### Patent Literature

PTL 1: JP H4-108478 U

JP57-037667-U proposes a device for mounting equipment under the floor of a rail vehicle.

JP53-096552-U proposes a wheel-mounted frame which is moveable on rails.

JP08-080848 A proposes a device for mounting equipment under the floor of a rail vehicle.

### Summary of Invention

### Technical Problem

In performing an operation of fixing the mounting frame mounted with a plurality of pieces of equipment to the railroad vehicle by using the apparatus described in PTL 1, a step of positioning the mounting frame and a step of individually mounting each piece of equipment under the floor of the railroad vehicle are completed at one time, which can improve work efficiency in terms of man-hours.

However, by adopting the mounting frame, a weight of the mounting frame is added to the railroad vehicle, causing a problem that the weight of the railroad vehicle itself as a finished product is increased.

In addition, when transporting and positioning the mounting frame mounted with a plurality of pieces of equipment of several hundreds of kilograms to a predetermined position with a carrier truck, it is difficult to increase a moving speed of the carrier truck for safe transportation, requiring time for the positioning work.

Furthermore, when a track or the like for the railroad vehicle is provided in a work space, flatness and smoothness of the floor surface of the work space are poor, causing problem that more time and man-hours are required for the positioning work involving fine adjustment by the carrier truck.

Accordingly, it is an object of the present invention to provide an equipment mounting apparatus and an equipment mounting method that enable each piece of equipment to be easily positioned to the railroad vehicle without using an additional mounting member.

### Solution to Problem

To solve the above-mentioned problems, a first aspect of the present invention provides an equipment mounting apparatus according to claim 1.

A second aspect of the present invention provides a method for mounting equipment according to claim 6.

### Advantageous Effects of Invention

According to the present invention, it is possible to provide the equipment mounting apparatus and the equipment mounting method that can easily position each piece of equipment to the railroad vehicle without using an additional mounting member.

Further, according to the present invention, it is possible to reduce a burden on an operator in transferring the equipment and positioning the equipment on the mounting portion.

### Brief Description of Drawings

FIG. 1 is a side view of an equipment mounting apparatus according to the present invention.
FIG. 2 is a top view of the equipment mounting apparatus according to the present invention.
FIG. 3 is a top view of a connecting device of the equipment mounting apparatus according to the present invention.
FIG. 4 is a cross-sectional view (cross section B-B in FIG. 3) of the connecting device of the equipment mounting apparatus according to the present invention.
FIG. 5 is a side view (cross section A-A in FIG. 2) illustrating a state in which equipment is being mounted under a floor of a vehicle by the equipment mounting apparatus according to the present invention.
FIG. 6 is a side view illustrating a state in which an air tank is being mounted to a floor of a vehicle by the equipment mounting apparatus according to the present invention.
FIG. 7 is a front view (cross section C-C in FIG. 6) of the equipment mounting apparatus for mounting the air tank to the vehicle.

### Description of Embodiments

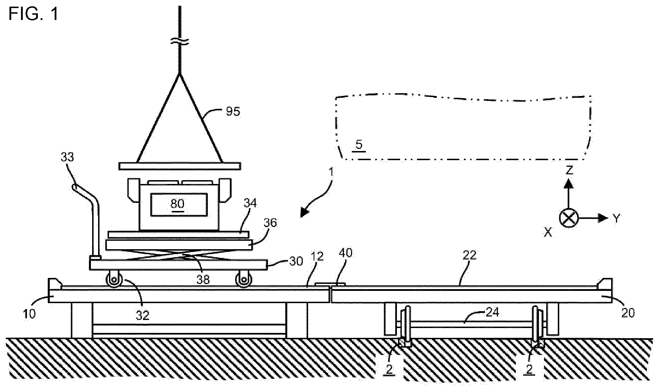

Hereinafter, with reference to FIGS. 1 to 7, description will be given of an equipment mounting apparatus and an equipment mounting method for mounting underfloor equipment such as an auxiliary power supply device and an air tank under a floor of the railway vehicle.

In this specification, "railway vehicle" is a generic term for vehicles that travel along a laid track, and includes, for example, a railroad vehicle, a street car, a new transport system vehicle, a monorail vehicle, or the like. Therefore, in the following description, a railroad vehicle will be exemplified as a representative railway vehicle, and an equipment mounting apparatus 1 and an equipment mounting method will be explained.

First, a direction related to an operation of the equipment mounting apparatus 1 (mounting method) is defined. In this specification, as the direction related to the equipment mounting apparatus 1, the width direction (railroad tie direction) of the railroad vehicle 5 is defined as X direction, the longitudinal direction (rail direction) of the railroad vehicle 5 as Y direction, the height direction of the railroad vehicle 5 as Z direction.

They are merely shown as X direction, Y direction, and Z direction below.

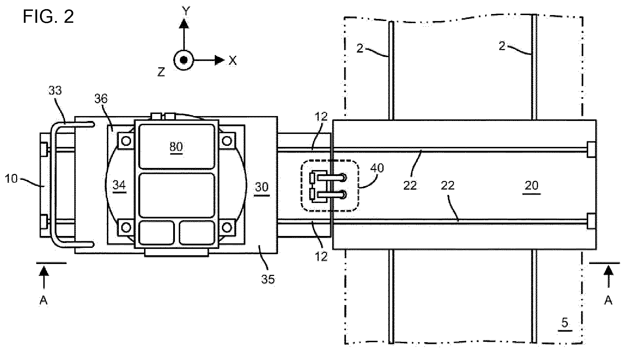

FIG. 1 is a side view of the equipment mounting apparatus 1 according to the present invention, and FIG. 2 is a top view of the equipment mounting apparatus 1 according to the present invention.

The equipment mounting apparatus 1 includes a first truck 20 that travels on a track 2 on which a temporary truck (not shown) that supports the railroad vehicle 5 rolls; a stage 10 that is disposed at a side position of the track 2 and capable of being coupled by the first truck 20; and a second truck 30 that travels on a guide traveling mechanism such as a guide rail that is laid on upper surfaces of the first truck 20 and the stage 10.

A width dimension of the first truck 20 is set larger than a width dimension of a lower surface of the railroad vehicle 5 such that a moving area of the second truck that moves on the first truck can cover the entire lower surface of the railroad vehicle 5, and the guide traveling mechanism (e.g., a guide rail 22) is laid on the upper surface of the first truck 20 over the substantially entire width in X direction. Further, the first truck 20 has an axle 24 capable of moving in Y direction on the common track 2 and the temporary truck (not shown) that supports the railroad vehicle 5.

Although, as the axle 24 illustrated in FIG. 1, wheels that roll on the upper surface of the track 2 and these wheels connected by an axle shaft are illustrated, it is also possible, for example, to omit the axle shaft and use wheels that travel in a recess provided together with the track 2 (groove provided such that a flange of the wheel of the temporary truck that supports the railroad vehicle 5 can easily pass).

The stage 10 is fixed on either one of roadbeds in X direction of the track 2 along the track 2, and a height of the upper surface of the stage 10 is substantially the same as a height of the upper surface of the first truck 20.

On the upper surface of the stage 10, the guide traveling mechanism (e.g., a guide rail 12) along X direction is laid. A gauge of the guide rail 12 is set to be same as the gauge of the guide rail 22 of the first truck described above, and the guide rail 12 and the guide rail 22 are disposed at the same position in Y direction, forming a common guide rail between the stage 10 and the first truck 20.

With such an arrangement, the second truck 30 can move between the guide rail 22 of the first truck and the guide rail 12 of the stage 10. In addition, since the second truck 30 can reciprocate between the guide rails 12 and 22 having the same gauge, a work of an operator can be made easier with a simple structure.

In coupling the stage 10 and the first truck 20 described above, in order to maintain the connection between the guide rail 12 of the stage 10 and the guide rail 22 of the first truck 20, across an end part on the first truck 20 side of the stage 10, and an end part on the stage 10 side of the first truck 20, a connecting device 40 is provided to restrain movement of the first truck 20 in Y direction.

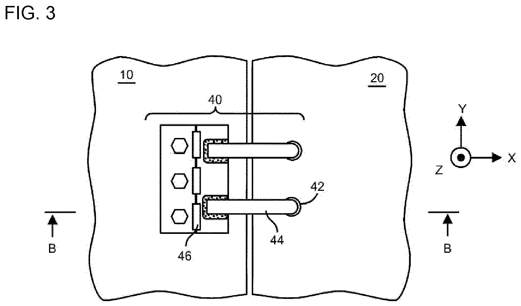

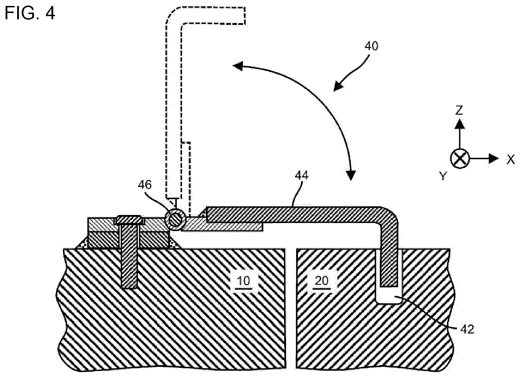

FIG. 3 is a top view of the connecting device of the equipment mounting apparatus 1 according to the present invention, and FIG. 4 is a cross sectional view (cross section B-B in FIG. 3) of the connecting device of the equipment mounting apparatus 1 according to the present invention.

The connecting device 40 is configured by a hinge 46 fixed to the upper surface of the stage 10, and a locking part 44 fixed to the hinge 46. The locking part 44 can rotate around the hinge 46 as a fulcrum in a plane including X direction and Z direction (see FIG. 4). When the locking part 44 is tilted, the tip part of the locking part 44 is inserted into a hole 42 provided on the upper surface of the first truck 20, restraining a relative movement in Y direction between the stage 10 and the first truck 20.

When the stage 10 and the first truck 20 are connected by the connecting device 40, the guide rail 12 of the stage 10 and the guide rail 22 of the first truck 20 are connected. With a series of guide rails formed in this way, the second truck 30 can travel back and forth between the upper surfaces of the stage 10 and the first truck 20.

With such a configuration, since the movement of the first truck 20 in Y direction is restrained with respect to the stage 10 when the second truck 30 is moved, the position of the first truck 20 is stabilized, so that an operator who moves the second truck 30 can work safely.

Although FIG. 3 illustrates a case where the hinge 46 is provided on the stage 10, and the hole 42 to be inserted with the tip of the locking part 44 is provided to the first truck 20, the arrangement may be such that the hinge 46 is provided to the first truck 20, and the hole 42 is provided on the stage 10.

According to these configurations of the connecting device 40, an operator can simplify the work of coupling the stage 10 and the first truck 20.

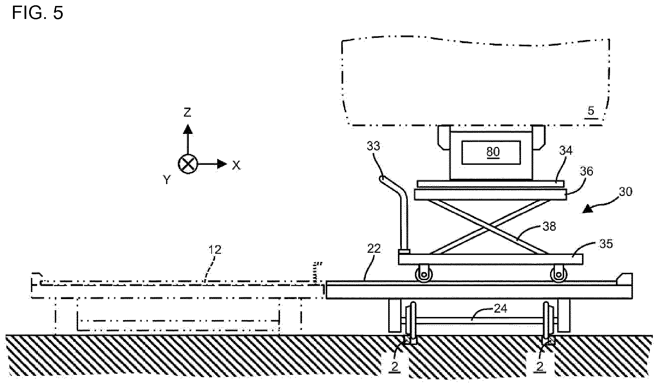

FIG. 5 is a side view (cross section A-A in FIG. 2) illustrating a state in which equipment is being mounted under the floor of the vehicle by the equipment mounting apparatus 1 according to the present invention.

The second truck 30 includes a pedestal 35 provided below with an axle that rolls on the guide rail 12 of the stage 10 and a guide rail 22 of the first truck 20; a lifting device 38 that is provided on the upper surface of the pedestal 35 and lifts stage 36 in Z direction; and a turntable 34 provided on the upper surface of a lifting table 36. At an end portion of the pedestal 35 in X direction, there is provided a handrail 33 to be held by an operator in moving the second truck 30.

With reference to FIGS. 1 to 5, a procedure for providing underfloor equipment 80 on a lower surface of the railroad vehicle 5 will be described.

First, the first truck 20 is moved to the side of the stage 10, and the stage 10 and the first truck 20 are connected by the connecting device 40. At this time, the railroad vehicle 5 is disposed above the first truck 20.

Next, on the upper surface of the turntable 34 of the second truck 30 placed on the stage 10, there is placed equipment 80 to be mounted to the lower surface (under the floor) of the railroad vehicle 5, by a ceiling crane 95 (see FIG. 1) or a forklift (not shown).

Subsequently, the operator moves the second truck 30 mounted with the equipment 80 from the upper surface of the stage 10 to the upper surface of the first truck 20. At this time, after the second truck 30 is disposed at a predetermined position on the upper surface of the first truck, an axle 32 may be fixed with a stopper or the like to prevent the second truck 30 from rolling on the guide rail 22 of the first truck 20, as necessary.

It should be noted that the axle 32 that supports the second truck 30 to be capable of rolling may not necessarily have an axle shaft, and each wheel may be provided below the pedestal 35.

Thereafter, the operator releases the connection between the stage 10 and the first truck 20 with the connecting device 40, and the first truck 20 mounted with the second truck 30 is moved along the track 2 to a downward position of the railroad vehicle 5 that is to be fixed with the underfloor equipment 80. Then, the lifting device 38 is driven to raise the lifting table 36 and the turntable 34, and the mounting portion of the equipment 80 is abutted to the mounting portion under the floor of the railroad vehicle 5.

At this time, when fine adjustment in X direction is required, the position of the second truck 30 is adjusted along the guide rail 22, and when fine adjustment in Y direction is required, the position of the first truck 20 is adjusted along the track 2, allowing easy positioning with high accuracy.

Further, when fine adjustment by rotation in the plane including X direction and Y direction is required, the position can be adjusted by the turntable 34 provided to the second truck 30.

When the abutment of the mounting portion of the equipment 80 to the mounting portion under the floor of the railroad vehicle 5 is completed, the equipment 80 is fixed under the floor of the railroad vehicle 5 with a predetermined bolt or the like.

When the fixing operation of the equipment 80 to the railroad vehicle 5 is completed, the lifting device 38 is lowered and the first truck 20 is returned to a position where the first truck 20 can be connected to the stage 10, and then the first truck 20 is connected to the stage 10 by the connecting device 40. Thereafter, the second truck 30 is moved to the stage 10, and preparation for placing the next equipment on the second truck 30 is completed.

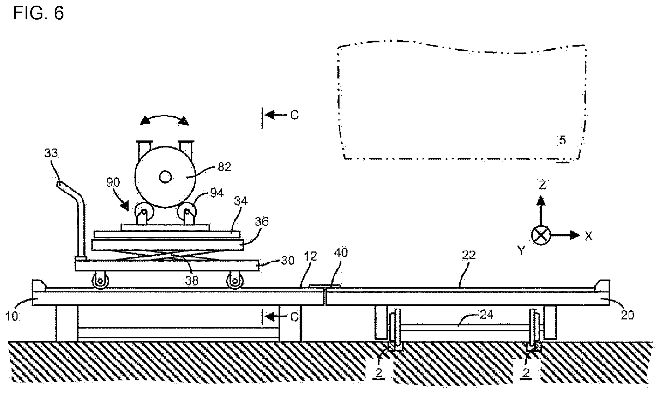

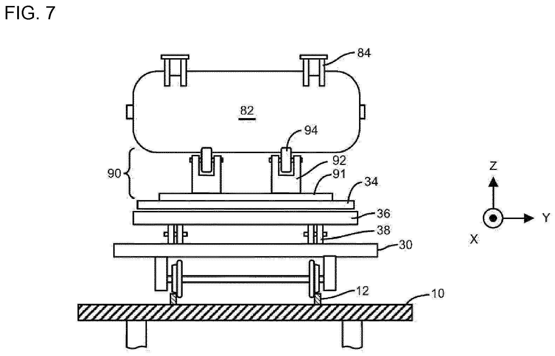

As a modification of the present invention, with reference to FIGS. 6 and 7, an outline of a mounting apparatus in mounting an air tank under the floor of the railroad vehicle is shown.

Here, FIG. 6 is a side view illustrating a state in which the air tank is being mounted under the floor of the vehicle by the equipment mounting apparatus 1 according to the present invention, and FIG. 7 is a front view of the equipment mounting apparatus 1 (cross section C-C in FIG. 6) that mounts the air tank to the vehicle.

When mounting an air tank 82 under the floor for the railroad vehicle 5, a tank supporting device 90 is disposed on the upper surface of the turntable 34 of the second truck 30, and the air tank 82 is placed on the tank supporting device 90.

The tank supporting device 90 is configured by a pedestal 91 and a tank supporting mechanism (equipment supporting mechanism) 92 that supports a body of the air tank 82. The tank supporting mechanism 92 is configured by two roller support parts 93 spaced apart by arranging the rotation axes of the rollers 94 on the same line, and a pair of the rotation axes of the respective rollers 94 are provided parallel to the pedestal 91.

The air tank 82 is fixed to the upper surface of the pallet in a posture in which a mounting leg 84 faces downward, to be carried into the manufacturing site. The air tank 82 is lifted by the ceiling crane 95 in a posture in which the mounting leg 84 faces downward, and is placed on the tank supporting device 90.

The air tank 82 placed on the tank supporting device 90 is rotated 180°over the rollers 94 around an axis of the air tank 82 to obtain a posture to be mounted under the floor of the railroad vehicle 5.

Then, similarly to the method described in FIGS. 1 to 5, after the air tank 82 is transported and positioned to a predetermined position on the lower surface of the railroad vehicle 5, the air tank 82 is lifted by the lifting device 38, and the mounting leg 84 is abutted to the mounting portion under the floor of the railroad vehicle 5 and fixed with bolts or the like.

The mounting apparatus according to the present invention includes a plurality of trucks corresponding to each of transporting directions. That is, the equipment 80 or the like is transported in X direction by the second truck 30, the equipment 80 or the like is transported in Y direction by the first truck 20, and the equipment 80 or the like is lifted in Z direction by the lifting device 38 of the second truck 30, and as necessary, the equipment 80 or the like is rotated on the horizontal plane by the turntable 34 of the second truck 30. With these mechanisms, it is possible to perform positioning with respect to each direction of XYZ with high accuracy.

After positioning of the equipment 80 or the like is completed, the mounting leg of the equipment 80 or the like is fixed to the lower surface of the railroad vehicle 5. Since the trucks each travel only along the respective guiding mechanisms, the trucks can move linearly toward the moving direction without consideration of unintended movement in the direction crossing the moving direction.

In the mounting apparatus according to the present invention, the second truck 30 is supported on the axle 32, and the axle 32 rolls on the guide rail 12 and the guide rail 22. At this time, friction between the axle 32 and the guide rails 12 and 22 is small, so that a single operator can easily transport the equipment 80 or the like in X direction.

In addition, since the equipment 80 or the like is transported only in X direction, even if the center of gravity of the equipment 80 is high, it is only necessary to support an opposite side in the moving direction. Furthermore, since the friction is low, it is possible to safely and rapidly transport in X direction by a single operator with small man-hours, and also to improve the positioning accuracy.

Further, the first truck 20 is supported on the axle 24, and the axle 24 rolls on the track 2. Since the friction between the axle 24 and the track 2 is small, a single operator can easily and rapidly transport the equipment 80 or the like in Y direction.

In addition, since the equipment 80 or the like is transported only in Y direction, even if the center of gravity of the equipment 80 is high, it is only necessary to support an opposite side in the moving direction. Furthermore, since the friction is low, it is possible to safely and rapidly transport in Y direction by a single operator with small man-hours, and also to improve the positioning accuracy.

In the mounting apparatus according to the present invention, a dimension of the first truck 20 in X direction is made larger than a dimension of the lower surface of the railroad vehicle 5 in X direction. Therefore, since the second truck 30 can be moved to a greater extent than the dimension of the lower surface of the railroad vehicle 5 in X direction, the equipment 80 or the like can also be rapidly and stably fixed on an end part in X direction of the lower surface of the railroad vehicle 5, by a single operator with small man-hours.

Further, by connecting the stage 10 and the first truck 20 with the connecting device 40, movement of the first truck 20 in Y direction is suppressed, and the continuous guide rail extending from the guide rail 12 to the guide rail 22 can be positioned easily. Therefore, since the second truck 30 mounted with the equipment 80 or the like can be smoothly moved between the stage 10 and the first truck 20, it is possible to rapidly and safely fix the equipment 80 or the like to the lower surface of the railroad vehicle 5 by a single operator with small man-hours.

Further, the second truck 30 is installed with mounting the tank supporting device 90 that can be placed with the air tank 82 and can rotate the air tank 82 around the axis thereof to obtain an attachment posture, allowing a single operator to safely mount the equipment to the lower surface of the railroad vehicle 5, even if the posture of the equipment when being transported into the manufacturing site is different from the mounting posture to the lower surface of the railroad vehicle 5.

The examples described above have been illustrated in detail to facilitate description for easy understanding of the present invention, and are not necessarily limited to the examples that include all the illustrated configurations.

Additionally, a part of a configuration of an example may be replaced with a configuration of another example, and a configuration of an example may be added with a configuration of another example.

Moreover, a part of a configuration of each embodiment may be deleted, replaced, added with another configuration.

For example, although it is exemplified that the guide rail is provided on the stage and the first truck as the guide traveling mechanism, a pair of grooves may be formed instead of the guide rail to guide traveling of the second truck.

### Reference Signs List

1 equipment mounting apparatus
2 track
5 railway vehicle (railroad vehicle)
10 stage
12 guide traveling mechanism (guide rail)
20 first truck
21 hole
22 guide traveling mechanism (guide rail)
24 axle
30 second truck
32 axle
33 handrail
34 turntable
35 pedestal
36 lifting table
38 lifting device
40 connecting device
42 hole
44 locking part
46 hinge
80 equipment
82 air tank
84 leg
90 tank supporting device
91 pedestal
92 tank supporting mechanism (equipment supporting mechanism)
93 roller support part
94 roller
95 ceiling crane

## Claims

1. An equipment mounting apparatus (1) for mounting equipment under a floor of a railway vehicle (5) comprising:
a first truck (20) that travels on a track (2) on which a truck that supports the railway vehicle travels;
a stage (10) that is installed at a side position of the track;
a second truck (30) provided movable between upper surfaces of the stage and the first truck; and
a connecting device (40) that is provided across the stage (10) and the first truck (20) which restrains movement of the first truck;
wherein, on each of the upper surfaces of the stage and the first truck, there is provided a guide traveling mechanism (12) on which the second truck travels (30); and
wherein the second truck (30) has a lifting device (38) that lifts and lowers a pedestal (35) on which equipment to be mounted under the floor of the railway vehicle is placed.

2. The equipment mounting apparatus (1) according to claim 1, wherein
the connecting device (40) is configured by:
a hinge (46);
a locking part (44) connected to the hinge (46) and rotatable in a vertical plane including the stage (10) and the first truck (20); and
a hole (42) into which a tip part of the locking part is inserted.

3. The equipment mounting apparatus (1) according to claim 2, wherein
the second truck (30) further comprises a turntable (34) that rotates the equipment in a horizontal plane, on an upper surface of the pedestal.

4. The equipment mounting apparatus (1) according to claim 3, wherein
the second truck (30) further comprises a pair of equipment supporting mechanisms (92) on an upper surface of the turntable, and
the pair of equipment supporting mechanisms (92) are arranged such that rotation axes of supporting members that rotatably support the support surface of the equipment are on a same line.

5. The equipment mounting apparatus (1) according to claim 1, wherein
a dimension of the first truck (20) is formed larger than a dimension of the railway vehicle (5) in a direction orthogonal to the track (2).

6. A method for mounting equipment under a floor of a railway vehicle (5) comprising:
a coupling step of coupling a first truck (20) that moves on a track (2) on which a truck of the railway vehicle (5) travels, to a stage (10) that is installed at a side position of the track;
a restraining step of fixing the first truck (20) and the stage (10) with a connecting device (40) in the coupling step;
a placing step of placing the equipment on a pedestal (35) of a second truck (30) disposed on the stage;
a moving step of moving the second truck (30) from above the stage (10) to above the first truck (20);
a longitudinal positioning step of moving and positioning a position of the first truck (20) placed with the second truck (30) in a longitudinal direction such that a position of the equipment in the longitudinal direction of the railway vehicle is a position to be mounted in the railway vehicle;
a width direction positioning step of moving and positioning a position of the second truck (30) in a width direction on the first truck (20) such that a position of the equipment in the width direction of the railway vehicle (5) is a position to be mounted in the railway vehicle; and
a connecting step of lifting the pedestal (35) on the second truck (30) in a height direction of the railway vehicle, and then connecting the equipment under the floor of the railway vehicle (5).

7. The method for mounting equipment according to claim 6, further comprising a fine adjustment step of finely adjusting a position of the equipment by rotating the pedestal (35) in a horizontal plane in the connecting step.

## Patentansprüche

1. Einrichtungsanbringungsvorrichtung (1) zum Anbringen einer Einrichtung unter einem Boden eines Schienenfahrzeugs (5), Folgendes umfassend:
ein erstes Fahrwerk (20), das sich auf einem Gleis (2) fortbewegt, auf dem sich ein Fahrwerk, das das Schienenfahrzeug trägt, fortbewegt;
eine Plattform (10), die auf einer Seitenposition des Gleises angebracht ist;
ein zweites Fahrwerk (30), das bewegbar zwischen oberen Flächen der Plattform und des ersten Fahrwerks bereitgestellt ist; und
eine Verbindungsvorrichtung (40), die quer über die Plattform (10) und das erste Fahrwerk (20) bereitgestellt ist und eine Bewegung des ersten Fahrwerks einschränkt;
wobei auf jeder der oberen Flächen der Plattform und des ersten Fahrwerks ein Bewegungsführungsmechanismus (12) bereitgestellt ist, auf dem sich das zweite Fahrwerk (30) fortbewegt; und
wobei das zweite Fahrwerk (30) eine Hebevorrichtung (38) aufweist, die ein Untergestell (35) hebt und senkt, auf dem eine Einrichtung, die unter dem Boden des Schienenfahrzeugs anzubringen ist, angeordnet ist.

2. Einrichtungsanbringungsvorrichtung (1) nach Anspruch 1, wobei
die Verbindungsvorrichtung (40) konfiguriert ist durch
ein Gelenk (46);
einen Verriegelungsteil (44), der mit dem Gelenk (46) verbunden und in einer vertikalen Ebene, die die Plattform (10) und das erste Fahrwerk (20) umfasst, drehbar ist; und
ein Loch (42), in das ein Endteil des Verriegelungsteils eingebracht ist.

3. Einrichtungsanbringungsvorrichtung (1) nach Anspruch 2, wobei das zweite Fahrwerk (30) ferner eine Drehscheibe (34) umfasst, die die Einrichtung auf einer oberen Fläche des Untergestells in einer horizontalen Ebene dreht.

4. Einrichtungsanbringungsvorrichtung (1) nach Anspruch 3, wobei das zweite Fahrwerk (30) ferner ein Paar von Einrichtungsträgermechanismen (92) auf einer oberen Fläche der Drehscheibe umfasst, und wobei
das Paar von Einrichtungsträgermechanismen (92) so angeordnet ist, dass die Drehachsen von Trägerelementen, die die Auflagefläche der Einrichtung drehbar lagern, auf derselben Linie sind.

5. Einrichtungsanbringungsvorrichtung (1) nach Anspruch 1, wobei eine Dimension des ersten Fahrwerks (20) in eine Richtung, die zum Gleis (2) orthogonal ist, größer ausgebildet ist als eine Dimension des Schienenfahrzeugs (5).

6. Verfahren zum Anbringen einer Einrichtung unter einem Boden eines Schienenfahrzeugs (5), Folgendes umfassend:
einen Kopplungsschritt des Koppelns eines ersten Fahrwerks (20), das sich auf Gleisen (2) fortbewegt, auf denen sich ein Fahrwerk des Schienenfahrzeugs (5) fortbewegt, mit einer Plattform (10), die auf einer Seitenposition des Gleises angebracht ist;
einen Einschränkungsschritt des Fixierens des ersten Fahrwerks (20) und der Plattform (10) mit einer Verbindungsvorrichtung (40) im Kopplungsschritt;
einen Anordnungsschritt des Anordnens der Einrichtung auf einem Untergestell (35) eines zweiten Fahrwerks (30), das auf der Plattform angeordnet ist;
einen Bewegungsschritt des Bewegens des zweiten Fahrwerks (30) von oberhalb der Plattform (10) zu oberhalb des ersten Fahrwerks (20);
einen Längspositionierungsschritt des Bewegens und Positionierens einer Position des ersten Fahrwerks (20), das mit dem zweiten Fahrwerk (30) angeordnet ist, in eine Längsrichtung, so dass eine Position der Einrichtung in Längsrichtung des Schienenfahrzeugs eine Position ist, die im Schienenfahrzeug anzubringen ist;
ein Breitenrichtungspositionierungsschritt des Bewegens und Positionierens einer Position des zweiten Fahrwerks (30) in eine Breitenrichtung des ersten Fahrwerks (20), so dass eine Position der Einrichtung in Breitenrichtung des Schienenfahrzeugs (5) eine Position ist, die im Schienenfahrzeug anzubringen ist; und
einen Verbindungsschritt des Hebens des Untergestells (35) auf dem zweiten Fahrwerk (30) in eine Höhenrichtung des Schienenfahrzeugs und anschließend des Verbindens der Einrichtung unter dem Boden des Schienenfahrzeugs (5).

7. Verfahren zum Anbringen einer Einrichtung nach Anspruch 6, ferner umfassend einen Feineinstellschritt des Feineinstellens einer Position der Einrichtung durch Drehen des Untergestells (35) in einer horizontalen Ebene im Verbindungsschritt.

## Revendications

1. Appareil de montage d'équipement (1) pour monter un équipement sous un plancher d'un véhicule ferroviaire (5) comprenant :
un premier bogie (20) qui se déplace sur une voie (2) sur laquelle se déplace un bogie qui supporte le véhicule ferroviaire ;
un étage (10) installé au niveau d'une position latérale de la voie ;
un second bogie (30) prévu mobile entre des surfaces supérieures de l'étage et du premier bogie ; et
un dispositif de connexion (40) qui est prévu à travers l'étage (10) et le premier bogie (20) qui restreint un déplacement du premier bogie ;
dans lequel, sur chacune des surfaces supérieures de l'étage et du premier bogie, est prévu un mécanisme de déplacement de guidage (12) sur lequel le second bogie se déplace (30) ; et
dans lequel le second bogie (30) comporte un dispositif de levage (38) qui soulève et abaisse un socle (35) sur lequel un équipement à monter sous le plancher du véhicule ferroviaire est placé.

2. Appareil de montage d'équipement (1) selon la revendication 1, dans lequel
le dispositif de connexion (40) est configuré par :
une charnière (46) ;
une partie de verrouillage (44) reliée à la charnière (46) et pouvant tourner dans un plan vertical comprenant l'étage (10) et le premier bogie (20) ; et
un trou (42) dans lequel une partie de pointe de la partie de verrouillage est insérée.

3. Appareil de montage d'équipement (1) selon la revendication 2, dans lequel
le second bogie (30) comprend en outre un plateau tournant (34) qui fait tourner l'équipement dans un plan horizontal, sur une surface supérieure du socle.

4. Appareil de montage d'équipement (1) selon la revendication 3, dans lequel
le second bogie (30) comprend en outre une paire de mécanismes de support d'équipement (92) sur une surface supérieure du plateau tournant, et
la paire de mécanismes de support d'équipement (92) est agencée de sorte que des axes de rotation d'éléments de support qui supportent de manière rotative la surface de support de l'équipement sont sur une même ligne.

5. Appareil de montage d'équipement (1) selon la revendication 1, dans lequel
une dimension du premier bogie (20) est formée plus grande qu'une dimension du véhicule ferroviaire (5) dans une direction orthogonale à la voie (2).

6. Procédé de montage d'équipement sous un plancher d'un véhicule ferroviaire (5) comprenant :
une étape de couplage d'un premier bogie (20) qui se déplace sur une voie (2) sur laquelle un bogie du véhicule ferroviaire (5) se déplace, à un étage (10) qui est installé au niveau d'une position latérale de la voie ;
une étape de retenue consistant à fixer le premier bogie (20) et l'étage (10) à l'aide d'un dispositif de connexion (40) durant l'étape de couplage ;
une étape de placement consistant à placer l'équipement sur un socle (35) d'un second bogie (30) disposé sur l'étage ;
une étape de déplacement consistant à déplacer le second bogie (30) du dessus de l'étage (10) jusqu'au-dessus du premier bogie (20) ;
une étape de positionnement longitudinal consistant à déplacer et à positionner une position du premier bogie (20) placée avec le second bogie (30) dans une direction longitudinale de sorte qu'une position de l'équipement dans la direction longitudinale du véhicule ferroviaire est une position de montage dans le véhicule ferroviaire ;
une étape de positionnement dans une direction de largeur consistant à déplacer et à positionner une position du second bogie (30) dans une direction de largeur sur le premier bogie (20) de telle sorte qu'une position de l'équipement dans la direction de largeur du véhicule ferroviaire (5) est une position de montage dans le véhicule ferroviaire ; et
une étape de connexion consistant à soulever le socle (35) sur le second bogie (30) dans une direction de hauteur du véhicule ferroviaire, puis à connecter l'équipement sous le plancher du véhicule ferroviaire (5).

7. Procédé de montage d'équipement selon la revendication 6, comprenant en outre une étape d'ajustement précis consistant à ajuster de manière précise une position de l'équipement en faisant tourner le socle (35) dans un plan horizontal lors de l'étape de connexion.
